(19) Europäisches Patentamt
European Patent Office
Office européen des brevets

(11) Publication number: **0 530 896 A2**

# (12) EUROPEAN PATENT APPLICATION

(21) Application number: **92202569.7**

(51) Int. Cl.[5]: **C08L 67/00**, C08L 25/18

(22) Date of filing: **24.08.92**

(30) Priority: **26.08.91 US 749821**

(43) Date of publication of application: **10.03.93 Bulletin 93/10**

(84) Designated Contracting States: **DE FR GB**

(71) Applicant: **EASTMAN KODAK COMPANY**
**343 State Street**
**Rochester, New York 14650-2201(US)**

(72) Inventor: **Massa, Dennis Jon, c/o EASTMAN KODAK COMPANY**
**Patent Department, 343 State Street**
**Rochester, New York 14650-2201(US)**
Inventor: **Teegarden, David Morrison, c/o EASTMAN KODAK CO.**
**Patent Department, 343 State Street**
**Rochester, New York 14650-2201(US)**
Inventor: **Colby, Ralph Hayes, c/o EASTMAN KODAK COMPANY**
**Patent Department, 343 State Street**
**Rochester, New York 14650-2201(US)**
Inventor: **Landry, Christine Joanne T., c/o EASTMAN KODAK CO.**
**Patent Department, 343 State Street**
**Rochester, New York 14650-2201(US)**
Inventor: **Landry, Michael Raymond, c/o EASTMAN KODAK CO.**
**Patent Department, 343 State Street**
**Rochester, New York 14650-2201(US)**
Inventor: **Long, Timothy Edward, c/o EASTMAN KODAK COMPANY**
**Patent Department, 343 State Street**
**Rochester, New York 14650-2201(US)**

(74) Representative: **Aufflick, James Neil et al**
**Kodak Limited, Patent Department, Headstone Drive**
**Harrow, Middlesex HA1 4TY (GB)**

## (54) Polyester/poly(vinylphenol) blends.

(57) A miscible blend is disclosed. The blend includes a) a thermoplastic polyester wherein the diacid component of said polyester includes aromatic groups and wherein the diol component of said polyester comprises at least about 20 mole percent of a non-cyclic, aliphatic diol and b) a vinylphenol containing polymer;

wherein components a) and b) are present in relative proportions by weight within the range of from about 1:99 to 99:1 parts based on 100 parts of the combined components a) and b).

EP 0 530 896 A2

The present invention is directed to blends of certain polymers. The blends are miscible and find many uses such as packaging applications owing to their chemical resistance and clarity.

Miscible blends of poly(vinylphenol), or PVPh, with various polymers have been reported in the literature:

(1) with poly(vinyl acetate) for use in films and fibers,
(2) with ethylene/(carbon monoxide) copolymers for use as wrapping materials for food and drinks and for gasoline containers,
(3) with ethylene/(vinyl acetate) (EVA) copolymers for use as adhesives,
(4) with MEEP polyphosphazene,
(5) with poly(caprolactone), poly(propriolactone), poly(ethylene oxide), poly(vinylpyrrolidone), poly(methyl vinyl ether), and poly(ethyl vinyl ether),
(6) with various polyacrylates and polymethacrylates,
(7) with poly(4-vinylpyridine),
(8) with poly(ethyloxazoline),
(9) with poly (ethylene succinate).

One reference which discloses a number of PVPh blends is Moskala, Varnell and Coleman; Concerning the miscibility of poly(vinylphenol) blends -FTir study; Polymer vol 26, pg 228 (1985). This reference, for example, discloses miscible blends of PVPh with all-aliphatic polyesters (for example poly($\epsilon$-caprolactone)).

While there have been a number of successes with blending PVPh with other polymers, the miscibility of polymer blends remains unpredictable. As will be shown in the comparative examples below, many polymers that are similar to those blended with PVPh according to the present invention, are not miscible. For example, it is shown in the comparative examples that PVPh does not form miscible blends with polyesters having an aromatic diacid component and an aromatic diol component.

In United States Patent 4,880,487 there is disclosed a hot melt adhesive composition comprising PVPh and other polymers. In example 3 of that patent there is described a laminate wherein a poly(ethylene terephthalate) (PET, Polymer 1a in the examples below) film is first surface treated with a solution of PVPh in acetone and water. However, since PET is soluble in neither acetone nor water, no blend of the PVPh and the PET was formed by this surface treatment.

There is a continuing need for blends that have improved properties compared to the single component polymers. It would be particularly useful if blends of commonly available polyesters could be provided with improved processing characteristics, chemical resistance and heat distortion temperature.

In accordance with the present invention there is provided a miscible blend of a) a thermoplastic polyester wherein the diacid component of said polyester includes aromatic groups and wherein the diol component of said polyester comprises at least about 20 mole percent of a non-cyclic, aliphatic diol and b) a vinylphenol containing polymer;

wherein components a) and b) are present in relative proportions by weight within the range of from about 1:99 to 99:1 parts based on 100 parts of the combined components a) and b).

It is particularly surprising that the polyester blends of the invention are miscible. Closely related polyesters, such as those having an aromatic or cyclic diol component, do not form miscible blends with poly(vinylphenol) polymers. In accordance with the present invention there is provided a miscible blend of two polymers. It should be noted at the outset that the blend can contain other components. In fact, the two polymers themselves can be parts of other polymers. For example, the vinylphenol can be copolymerized with another monomer such that a component known as a compatibilizer is formed. These compatibilizers are often block or graft copolymers.

Thus, a copolymer compatibilizer can be formed from, for example, vinylphenol and styrene and that compatibilizer can be used to compatibilize a mixture of polymers, including the described polyesters, that would not otherwise be compatible. The poly(vinylphenol) block forms a miscible mixture with the polyester component of the blend and the other block forms a miscible mixture with the other component of the blend and thus, a compatible blend is formed. So long as the polyester-PVPh portion of this composition meets the limitations of the claims, the composition is considered to be within the scope of the invention.

One of the components of the blend of the present invention is a thermoplastic polyester wherein the diacid component of the polyester includes aromatic groups and wherein the diol component of the polyester comprises at least 20 mole percent of a non-cyclic, aliphatic diol. The diacid component will be considered to be aromatic if at least 50 mole percent of the diacid is aromatic. As is well known in the polyester art, mixtures of diacids can be used. Particularly useful diacid components result in repeating units represented by the formula:

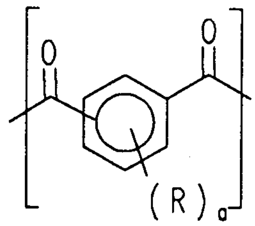

OR

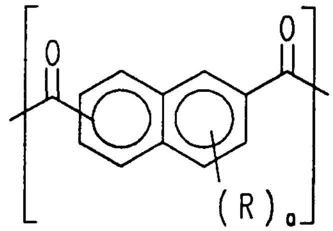

wherein a is an integer of from 1 to 4 and each R is independently selected from the group consisting of hydrogen; alkyl groups having from 1 to 4 carbon atoms, for example methyl, ethyl and t-butyl; and halogen, particularly bromo and chloro.

Particulary useful diacid components are derived from acids which include:

phthalic acid; isophthalic acid; terephthalic and naphthoic acid.

The second component of the polyester is a non-cyclic diol component. As noted, the diol component can include up to 80 mole percent of a cyclic component. Useful diol components result in repeating units having the structure:

$\{O-R^1-O\}$

wherein $R^1$ represents a straight or branched alkylene group of from 1 to 10 carbon atoms, for example butyl and neopentyl.

Other diols which can be used up to 80 mole percent include cyclic diols resulting in repeating units having the formula:

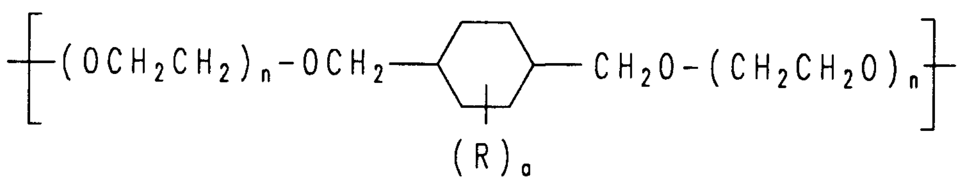

wherein n is 0 to 2 and a is an integer from 1 to 4 and each R is independently selected from the group consisting of hydrogen; alkyl groups having from 1 to 4 carbon atoms, for example methyl, ethyl and t-butyl; and halogen, particularly bromo and chloro.

Other useful diols result in repeating units having the formula:

$-O\{(CH_2)_n-O\}_m$

wherein n is an integer from 2 to 4 and m is an integer from 2 to 15.

Particulary useful diol components are derived from diols which include:

ethylene glycol; butanediol, cyclohexylene dimethanol, 1,2-propanediol and neopentyl glycol.

In the present invention, by miscible it is meant that the blended polymers form a homogeneous blend that has a single glass transition temperature. In addition, amorphous miscible blends are clear. In a typical test for clarity a blend of interest is coated or cast into a thin film. A blend is considered to be clear if ordinary newsprint can be read through the film. Immiscible blends are those that have more than one glass transition temperature or are opaque or show two distinct solid state NMR relaxation times.

The term compatible is a more general term typically meaning that the components mix and process without difficulty and have good material properties.

The polyesters that are useful in the invention can be made by methods which are extremely well known in the art. In fact, many of the useful polyesters are commercially available. Useful polyesters are commercially available from the Eastman Kodak Company under the trade names TENITE®, KODAR KODAPAK®, EKTAR PCTG® and EKTAR HPETG®.

The other component of the blend of the invention is a poly(vinylphenol) polymer. These polymers include repeating units derived from vinylphenol or derivatives thereof. Useful repeating units are derived from vinylphenol or derivatives of vinylphenol where the hydrogen of the hydroxy group is replaced with a group such as metal ions, silyl or organic groups such as tertiary-butyloxycarbonyloxy (tBOC), alkyl,

alkanoyl, and benzoyl. These repeating units can be represented by the formula:

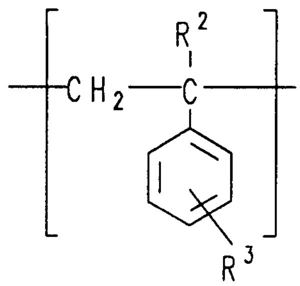

wherein $R^2$ is hydrogen or methyl and $R^3$ is selected from the group consisting of -OH, $-OSi(R^4)_3$ and -OM where M is a metal cation, tBOC, $OR^4$ and $OCOR^4$, where $R^4$ is selected from alkyl groups having 1 to 5 carbon atoms or aryl. In the above formula, M can be any univalent or divalent alkali, alkaline earth or transition metal cation. Non-limiting examples of such cations include sodium, magnesium, calcium, lithium, potassium and zinc cations. Where the group is not a hydroxy group, it is preferred to convert it to a hydroxy group. That is, the other alternatives to phenol itself are precursors to vinylphenol containing polymers.

The preferred range for the molecular weight of the vinylphenol polymer is between 1,500 and 500,000 daltons. Particularly preferred are vinylphenol polymers having a molecular weight between 30,000 and 100,000 daltons because the mechanical properties of these polymers are better. The preparation of high molecular weight vinylphenol containing polymers is described in: Frechet and others; NOVEL DERIVATIVES OF POLY(4-HYDROXYSTYRENE) WITH EASILY REMOVABLE TERTIARY, ALLYLIC OR BENZYLIC ETHERS; Polymer Bulletin 20, 427-434 (1988).

It is contemplated that $R^1$ in the formula above can be located in either the para or meta position. It is preferred, primarily for reasons of availability of starting materials and ease of synthesis, that $R^1$ be located in the para position. Additionally, it is contemplated that, in addition to the $R^1$ substituent, the pendant benzene ring can be substituted with such non-interfering substituents as C1-C4 alkyl, or halogen.

The vinylphenol polymer can contain other $\alpha,\beta$-ethylenically unsaturated monomers such as styrene, methyl methacrylate, isoprene and butadiene. These monomers can be present up to 70 mole percent of the polymer.

As noted in the summary of the invention, the polyester and the PVPh are present in relative proportions by weight within the range of from 1:99 to 99:1 parts based on 100 parts of the combined components a) and b). These limits are present merely to exclude deminimus amounts of one polymer in the other. As a practical matter, most of the defined polymers are miscible over the entire concentration range. In some circumstances, a small amount of the phenol may react with the ester in an interchange reaction to form a copolymer. These compositions are considered to be within the scope of the invention.

The blends of the invention can be made by methods which are well known in the art. These thermoplastic blends, for example, can be made by mixing powders of the two components together and then melt extruding the mixture in a screw extruder. In another method, both components are dissolved in a common solvent, for example dioxane, pyridine or tetrahydrofuran, and then precipitated in a non-solvent for both of the polymers, such as for example hexane. In another method, both components are dissolved in a common solvent and the solvent cast onto an inert substrate. All of these methods are illustrated in the examples.

In the examples below, the following polymers were blended with PVPh and were found to be miscible except for the comparison examples noted. The numbers associated with each component indicate the mole percent where appropriate:

Polymer 1

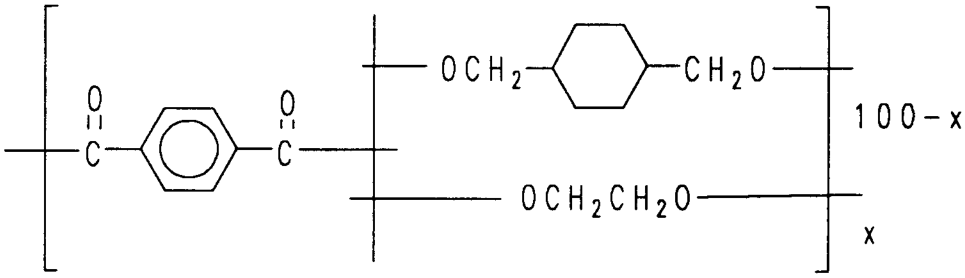

Polymer 1a x = 100:
Polymer 1b x = 68
Polymer 1c x = 50
Polymer 1d x = 30
Polymer 1e x = 20 Comparison (not miscible)
Polymer 1f x = 0 Comparison (not miscible)

Polymer 2:

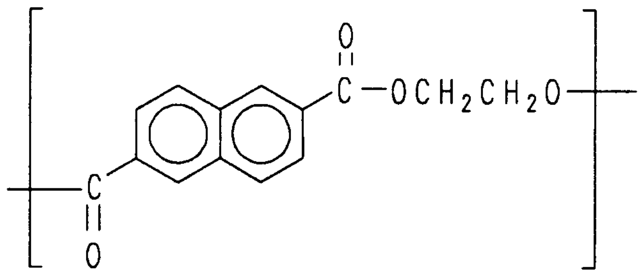

Polymer 3:

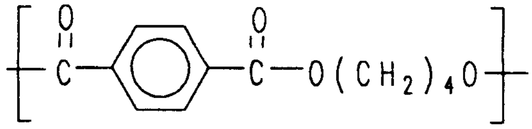

Polymer 4:

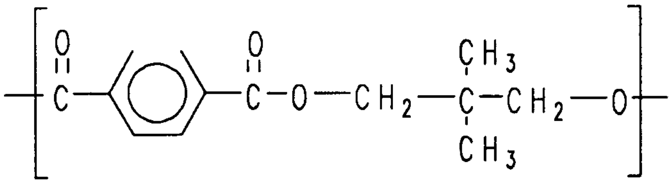

Polymer 5:

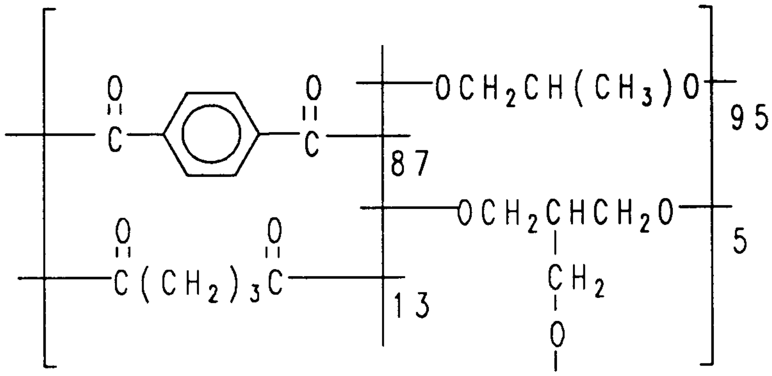

Polymer 6: Comparison (not miscible)

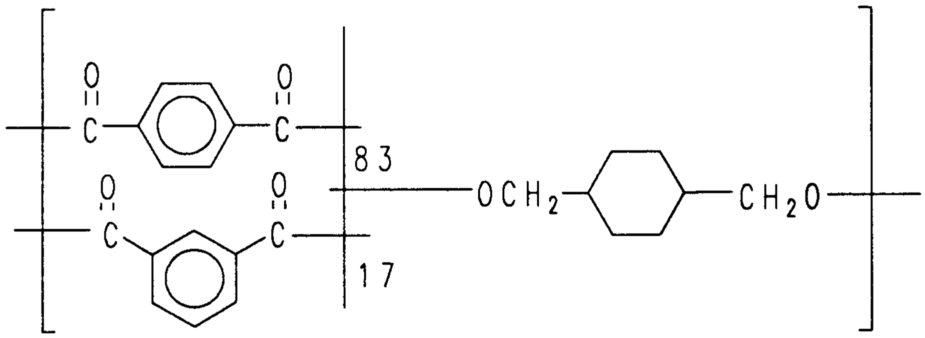

Polymer 7: Comparison (not miscible)

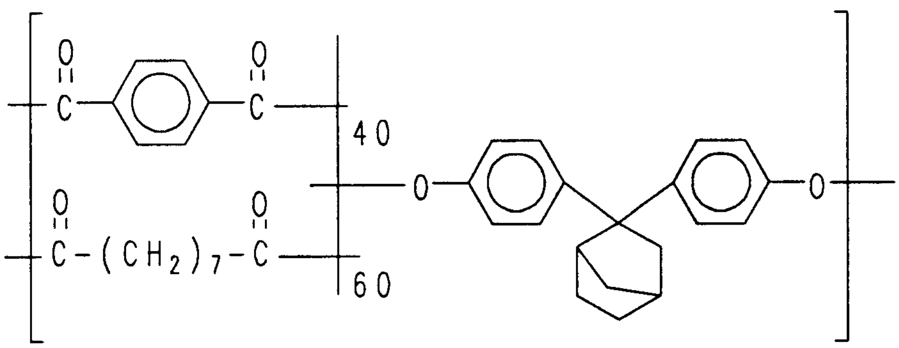

Polymer 8: Comparison (not miscible)

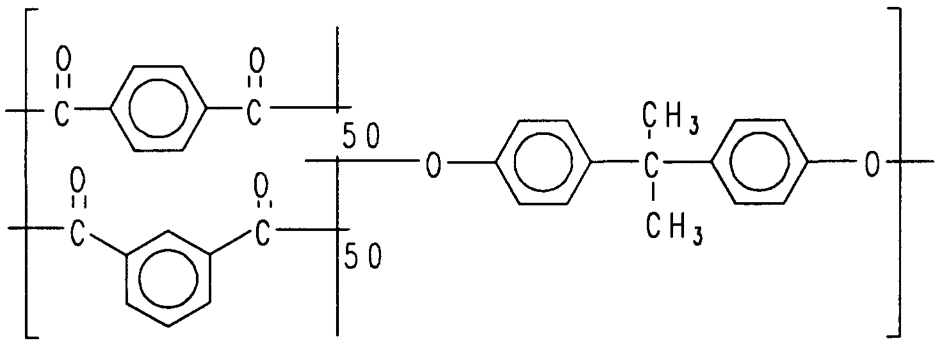

Polymer 9: Comparison (not miscible)

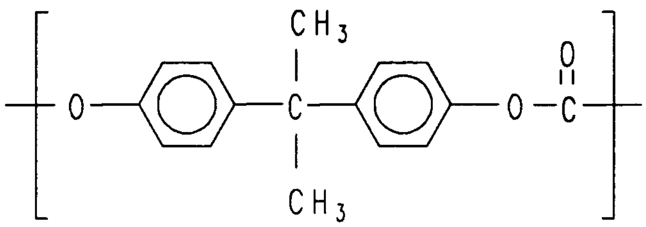

Polymer 10: Comparison (not miscible)

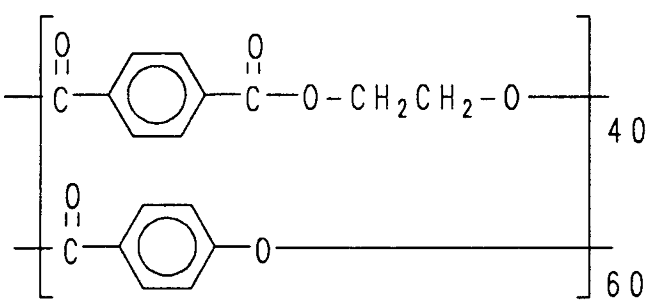

Each of comparison polymers 1e, 1f, and 6-10 is closely related to the polyesters, as defined, which are useful in the invention. However, these blends were not miscible further indicating that the blends of the invention provide properties that would not be expected. Other classes of polymers illustrated by comparison examples 11 and 12 also were not miscible.

Polymer 11: Comparison (not miscible)

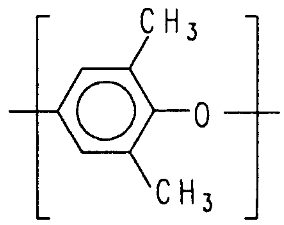

Polymer 12: Comparison (not miscible)

$-\!\!\!\![ OSi(CH_3)_2 ]\!\!\!\!-$

The following examples are presented for a further understanding of the invention.

Example 1. Melt-extruded PET/Poly(vinylphenol) Blend.

Poly(ethylene terephthalate) (PET) (Polymer 1a above) was obtained in powdered form. Poly-(vinylphenol), or PVPh, was obtained in powdered form and sieved through a strainer. Both polymers were dried at 105° C under vacuum for 6 days. 5.0 g of each was combined and shaken for 2 min, and then extruded through the extruder at a set temperature of about 254° C and 75 RPM. The resulting clear amorphous film had a single glass transition temperature (Tg) of 126° C, indicating that the polymers were miscible. The blend also showed a spontaneous crystallization temperature upon 20° C/min heating of 200° C and a subsequent melting point of 236° C.

Examples 2-13 Other Melt Extruded Blends

Twelve additional blends were made in a manner similar to Example 1. When the original polymer was unavailable as a powder, it was ground after cooling with liquid nitrogen ($LN_2$) and/or strained through a strainer. The thermal data and miscibility are listed for each blend in Table 1. (Table 1 lists 6 examples of the invention and 6 comparison blends.) The polymer structures are identified previously. In Table 1, Tg is the glass transition temperature measured in a manner similar to that described in Wendlandt, W.W. THERMAL ANALYSIS, 3rd ed., Wiley, New York, 1986, pgs 424-442. Similarly, Tm is the peak melting temperature measured in a manner similar to that described in Wendlant cited above. In the Tables below, "C" indicates a comparative example outside the scope of the invention. Where a second temperature is listed, this is the Tg of the second phase of the non-miscible blend.

Table 1

| Miscibility Studies Poly(vinylphenol)/ Polyester Blends | | | | | |
|---|---|---|---|---|---|
| Ex. | Polymer (grams) | Grams of PVPh | Tg(°C) | Tm(°C) | Miscible ? |
| 2 | 1d(9.4) | 9.4 | 144 | none | yes |
| 3 | 1b(10.8) | 9.9 | 129 | none | yes |
| 4 | 3(3.2) | 3.2 | 103 | 216 | yes |
| 5 | 2(2.9) | 2.9 | 149 | 260 | yes |
| 6 | 4 (2.0) | 2.0 | 118 | none | yes |
| 7 | 5 (2.0) | 2.0 | 116 | none | yes |
| 8C | 1f(8.7) | 8.7 | 113, 182 | 288 | no |
| 9C | 1e(5.1) | 5.1 | 105, >160 | 264 | no |
| 10C | 10(4.4) | 4.4 | -- | -- | no |
| 11C | 8(3.0) | 3.0 | 148 | none | no |
| | | | 187 | | |
| 12C | 7(2.0) | 2.0 | 86, 181 | 264 | no |
| 13C | 6(2.0) | 2.0 | 101, 177 | 264 | no |

Examples 14-29 Solution-prepared Polyester-PVPh Blends

Stock solutions of 5-wt% Polymer 1c in 60/40 (by volume) $CH_2Cl_2$/THF and 5-wt% PVPh in the same solvent were prepared separately by dissolving 0.30g polymer in 6.0g solvent. Three separate solutions were then prepared by blending the stock solutions of Polymer 1c and PVPh in the volume ratios of 1:3, 1:1, and 3:1. The blended solutions were diluted to 3.3-wt% and precipitated into n-hexane. The solids were then dried in a vacuum oven at room temperature until their glass transition temperatures were determined by DSC (differential scanning calorimetry). The DSC results indicating miscibility in all proportions are listed in Table 2 along with the results of other polymer blends prepared in a similar manner.

Table 2

Miscibility Results for Solution Prepared Poly(vinylphenol)/ Polyester Blends

| Ex. | Polymer | Solvent | Ratio Weight | Tg(°C) | Second Tg(°C) | Prep | Misc ? |
|---|---|---|---|---|---|---|---|
| 14 | 1c | a | 1:3 | 125 | | x | yes |
| 15 | " | " | 1:1 | 145 | | " | " |
| 16 | " | " | 3:1 | 172 | | " | " |
| 17C | 8 | b | 1:3 | 190 | -* | x | no |
| 18C | " | " | 1:1 | 188 | -* | " | " |
| 19C | " | " | 3:1 | 187 | -* | " | " |
| 20C | 7 | " | 1:3 | 144 | 187 | y | no |
| 21C | " | " | 1:1 | 145 | 186 | " | " |
| 22C | " | " | 3:1 | 144 | 187 | " | " |
| 23C | 9 | " | 1:3 | 144 | 184 | x | no |
| 24C | " | " | 1:1 | 141 | 189 | " | " |
| 25C | " | " | 3:1 | 139 | 188 | " | " |
| 26C | 11 | e | 1:3 | 180 | 203 | " | no |
| 27C | " | " | 1:1 | 186 | 213 | " | " |
| 28C | " | " | 3:1 | 186 | 215 | " | " |
| 29C | 12 | d | 1:1 | -121 | 170 | y | no |

*Not detectable

Solvent a- Methylene chloride/ tetrahydrofuran; 60/40 by volume; 3% solids

Solvent b- Tetrahydrofuran; 5% solids

Solvent c- Pyridine; 5% solids

Solvent d- Methyl ethyl ketone; 5% solids

Solvent e- Tetrahydrofuran; 5% solids; 50°C

Prep x- Precipitate into hexane; dry in vacuum at 65 °C for 24 hours

Prep y- Knife cast at room temperature; dry in vacuum at 70°C for 7.5 days; dry in vacuum at 130°C for 4 hours

Examples 30-32

In a manner similar to Example 1, various blends were melt-extruded. The blends included polyesters and vinylphenol-containing copolymers. The copolymers were copolymers of vinylphenol and styrene and

thus had the structure:

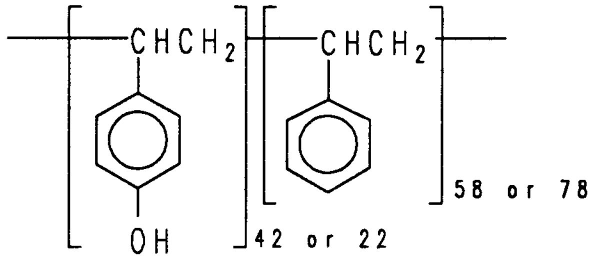

The results are listed in Table 3 below:

Table 3

| Miscibility studies Poly(vinylphenol) copolymer/ Polyester Blends | | | | | |
|---|---|---|---|---|---|
| Ex. | Mole Percent Vinylphenol in copolymer | Polyester | Ester/VPh ratio | Tg(° C) | Miscible ? |
| 30 | 42 | 1d | 1:1 | 122 | y |
| 31C | 22 | 1d | 1:1 | 94,126 | n |
| 32C | 22 | 1a | 1:1 | 74,124 | n |

**Claims**

1. A miscible blend of a) a thermoplastic polyester wherein the diacid component of said polyester includes aromatic groups and wherein the diol component of said polyester comprises at least about 20 mole percent of a non-cyclic, aliphatic diol and b) a vinylphenol containing polymer;
   wherein components a) and b) are present in relative proportions by weight within the range of from about 1:99 to 99:1 parts based on 100 parts of the combined components a) and b).

2. A miscible blend according to claim 1 wherein said diacid component results in repeating units having the formula:

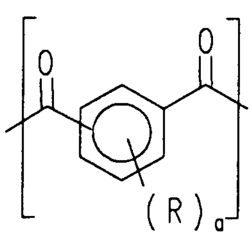

OR

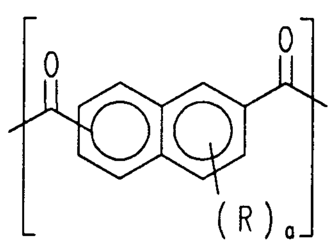

   wherein a is an integer of from 1 to 4 and each R is independently selected from the group consisting of hydrogen; alkyl groups having from 1 to about 4 carbon atoms; and halogen.

3. A miscible blend according to claim 1 or claim 2 wherein said aliphatic diol results in repeating units having the formula:

   $\{O-R^1-O\}$

   wherein $R^1$ represents a straight or branched alkylene group of from 1 to about 10 carbon atoms.

4. A miscible blend according to any one of the preceding claims wherein said aliphatic diol results in repeating units having the formula:

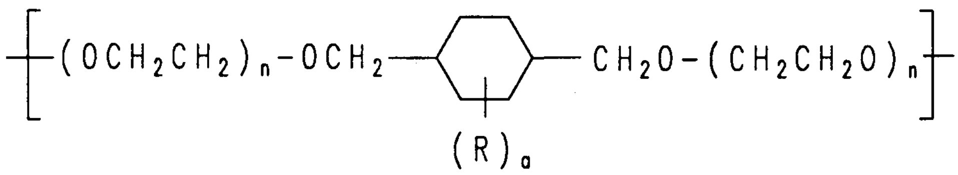

wherein n is 0 to 2 and a is an integer from 1 to 4 and each R is independently selected from the group consisting of hydrogen; alkyl groups having from 1 to about 4 carbon atoms; and halogen.

5. A miscible blend according to any one of the preceding claims wherein vinylphenol containing polymer contains repeating units represented by the formula:

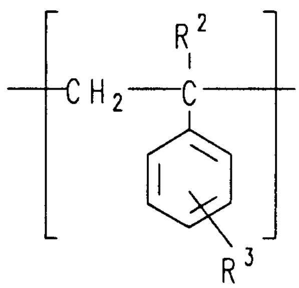

wherein $R^2$ is hydrogen or methyl and $R^3$ is selected from the group consisting of -OH, -OSi($R^4$)$_3$ and -OM where M is a metal cation, tBOC, $OR^4$, and $OCOR^4$, where $R^4$ is selected from alkyl groups having about 1 to 5 carbon atoms or aryl.

6. A miscible blend according to claim 5 wherein the vinylphenol containing polymer contains up to about 70 mole percent of other $\alpha,\beta$-ethylenically unsaturated monomers selected from the group consisting of styrene, methyl methacrylate, isoprene and butadiene.

7. A miscible blend according to any one of the preceding claims wherein the molecular weight of said vinylphenol containing polymer is between about 30,000 and 100,000 daltons.

8. A miscible blend according to any one of the preceding claims wherein said diacid component is derived from terephthalic acid and said diol component is derived from 20-99 mole percent derived from ethylene glycol, the remaining mole percent being derived from cyclohexylene dimethanol.